# EUROPÄISCHE PATENTANMELDUNG

(11) **EP 2 040 143 A2**
(43) Veröffentlichungstag der Anmeldung: **25.03.2009**
(21) Anmeldenummer: 08009459.2
(22) Anmeldetag: 23.05.2008
(51) Int. Cl.: G06F 1/18

(54) **I/O-Blech in einem Computergehäuse**

(30) Priorität: 24.09.2007 DE 102007045462
(71) Anmelder: Fujitsu Siemens Computers GmbH, 80807 München (DE)
(72) Erfinder: Köhler, Friedrich, 86405 Meitingen (DE); Schelshorn, Lorenz, 86179 Augsburg (DE)
(74) Vertreter: Epping - Hermann - Fischer

(57) **Zusammenfassung**

Die Erfindung betrifft ein Input/Output-Blech (abgekürzt als I/O-Blech) in einem Computergehäuse, das durch eine lösbare Schnapp- oder Klemmverbindung mit dem Computergehäuse verbunden ist.

## Beschreibung

Die Erfindung betrifft ein Input/Output-Blech (abgekürzt I/O-Blech) in einem Computergehäuse.

Ein I/O-Blech weist in der Regel mehrere Öffnungen zum Anschluss von Geräten an dem Computer auf, zum Beispiel einen Tastaturanschluss, einen USB-Anschluss und Ähnliches. Um verschiedene Varianten zu ermöglichen, ist es wichtig, dass das I/O-Blech an der Rückseite des Chassis (Computergehäuses) eines PCs oder Servers austauschbar ist. Auf diese Weise kann ein Typ eines Computergehäuses für viele Varianten bezüglich des I/O Blechs verwendet werden.

Bisher wurde das I/O-Blech eines Computers oder Servers durch zwei Schrauben in Verbindung mit zwei Haken an der Rückseite des Chassis befestigt. Aufgrund dieser zwei Schrauben ist das Montieren des I/O-Blechs allerdings relativ zeitaufwändig.

Der Erfindung liegt daher die Aufgabe zugrunde, ein I/O-Blech in einem Computergehäuse zu beschreiben, das einfacher und mit weniger Zeitaufwand montiert werden kann.

Die Aufgabe wird erfindungsgemäß dadurch gelöst, dass das I/O-Blech durch eine lösbare Schnapp- oder Klemmverbindung mit dem Computergehäuse verbunden ist und das I/O-Blech zumindest eine Lasche zum Einhängen am Computergehäuse aufweist, wobei das I/O-Blech für die Montage um die wenigstens eine Lasche geschwenkt wird.

Anstatt mit Schrauben befestigt zu werden, wird das I/O-Blech in der Chassis-Rückwand mit einer lösbaren Schnapp- oder Klemmverbindung verrastet. Das I/O-Blech weist die zumindest eine Lasche zum Einhängen am Computergehäuse auf. Eine solche Lasche steht von einem Rand des I/O-Blechs ab, und am gegenüberliegenden Rand ist bevorzugt die Schnapp- oder Klemmverbindung angeordnet.

Zur Positionierung des I/O-Blechs im Computergehäuse weist das I/O-Blech bevorzugt zumindest eine Führungsnase und das Computergehäuse zumindest eine entsprechende Führungsöffnung auf. Auf diese Weise ist kein Werkzeug zum Montieren des I/O-Blechs notwendig. Außerdem erfolgt das Montieren schneller.

Die schon vorhandenen zwei Schraubenlöcher an der Rückseite des Chassis, die bisher zum Anschrauben eines I/O-Blechs gedacht waren, können auch als Führungsöffnungen zur Positionierung des I/O-Blechs dienen. Das heißt das I/O-Blech entsprechend der Erfindung kann ohne jegliche Änderung der bisher verwendeten Chassis-Rückwand mit einem Handgriff montiert werden. Durch einfaches Einrasten der Schnapp- oder Klemmverbindung im I/O-Ausschnitt der Chassis-Rückwand wird das I/O-Blech festgehalten.

Weitere Einzelheiten und Ausgestaltungen der Erfindung sind in den Unteransprüchen aufgeführt.

Die Erfindung wird nachfolgend in einem Ausführungsbeispiel anhand der Zeichnungen näher erläutert.

### Die Figuren zeigen:

- Figur 1a: und 1b jeweils eine perspektivische Ansicht einer Chassis-Rückwand eines Computergehäuses mit einem I/O-Blech bei der Montage,
- Figur 1c: einen Querschnitt einer Chassis-Rückwand mit einem I/O-Blech bei der Montage,
- Figur 2a: und 2b jeweils eine perspektivische Ansicht einer Chassis-Rückwand mit I/O-Blech im montierten Zustand und
- Figur 2c: und 2d jeweils einen Querschnitt einer Chassis-Rückwand mit einem I/O-Blech im montierten Zustand.

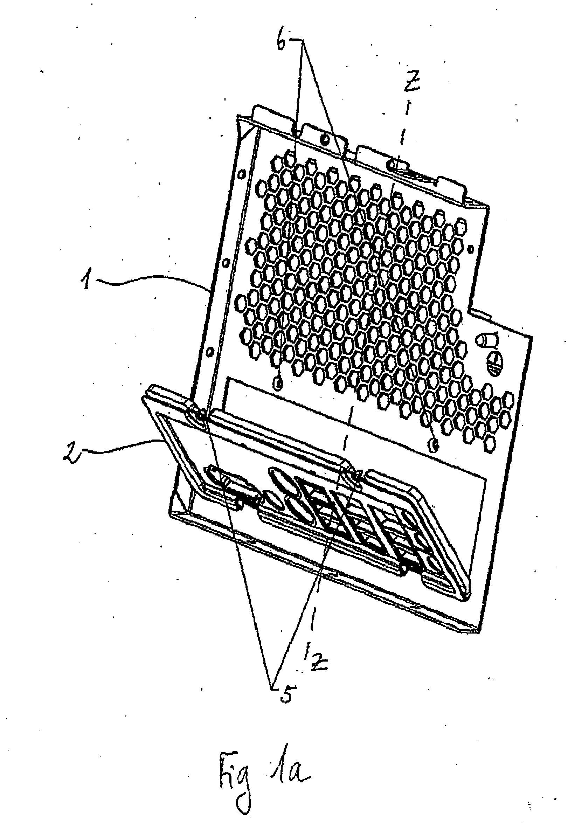

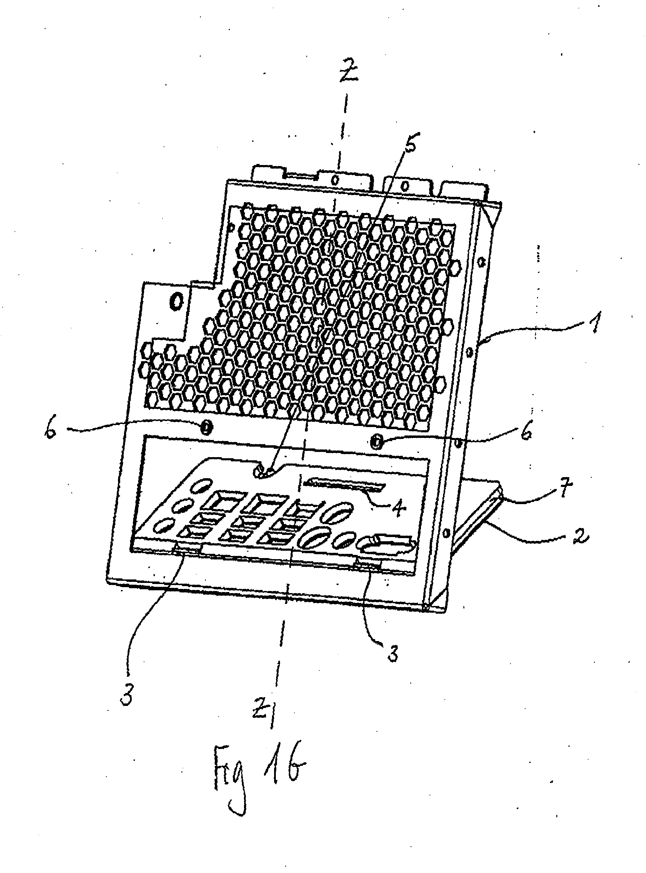

Figur 1a zeigt eine Chassis-Rückwand 1 eines Computers von der Computeraußenseite aus betrachtet, in der ein erfindungsgemäßes I/O-Blech 2 montiert wird. Die Figur 1b zeigt die Chassis-Rückwand 1 und das I/O-Blech 2 im gleichen Zustand von der Computerinnenseite aus betrachtet.

Das I/O-Blech 2 weist zwei Laschen 3 auf, die an einem Rand des I/O-Blechs 2 angeordnet sind und zum Einhängen im I/O-Ausschnitt der Chassis-Rückwand 1 ausgebildet sind (siehe Figur 1b). Das I/O-Blech 2 weist ein Feder-Element 4 auf, das zum Verrasten des I/O-Blechs 2 in der Chassis-Rückwand 1 dient. Das Feder-Element 4 ist auf der Innenseite des I/O-Blechs 2, das heißt auf der dem Computer zugewandten Seite des I/O-Blechs 2, und im Bereich des den Laschen 3 gegenüber liegenden Randes angeordnet. Dieses Feder-Element 4 und die zwei Laschen 3 bilden hier eine lösbare Schnappverbindung. Zur genaueren Positionierung des I/O-Blechs 2 stehen zwei Führungsnasen 5 zur Verfügung. Entsprechende Führungsöffnungen 6 sind in der Chassis-Rückwand 1 vorhanden.

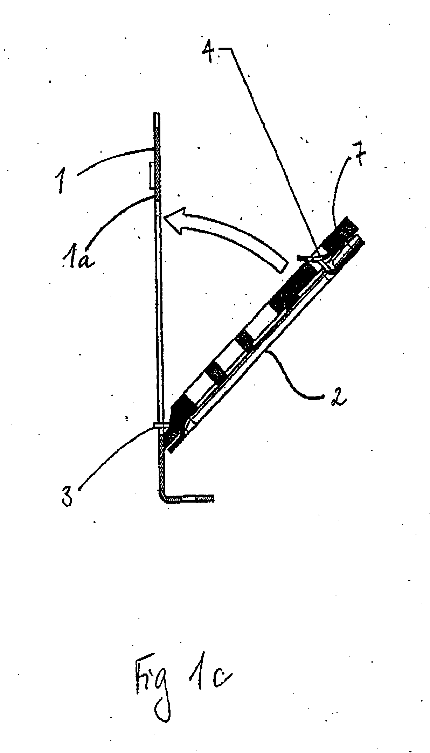

Figur 1c zeigt einen Querschnitt durch die in den Figuren 1a und 1b mit Z-Z gekennzeichnete Achse. Das I/O-Blech 2 weist zusätzlich ein Gasket (Schirmmaterial) 7 auf, das für die EMV-Dichtigkeit (EMV=Elektromagnetische Verträglichkeit) des Computergehäuses sorgt. Für die Montage wird das I/O-Blech 2 in Pfeilrichtung gedrückt und dabei wird das Feder-Element 4 gegen den I/O-Ausschnittsrand 1a der Chassis-Rückwand 1 in einen gespannten Zustand gebracht, bis es durch den Ausschnitt auf die Computerinnenseite der Chassis-Rückwand 1 dringt und leicht ausfedert, so dass das I/O-Blech 2 in der Chassis-Rückwand 1 einschnappt. Das I/O-Blech 2 wird dabei um die Laschen 3 geschwenkt (siehe Figur 1c).

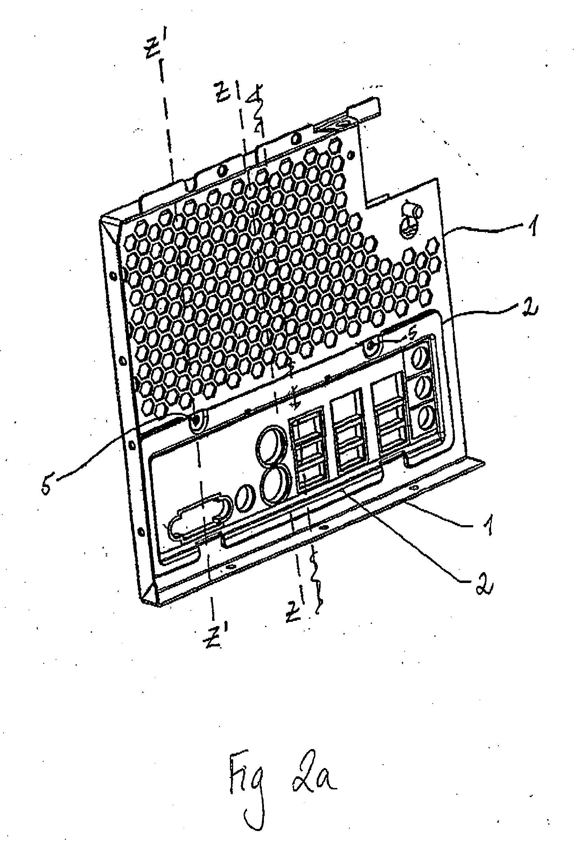

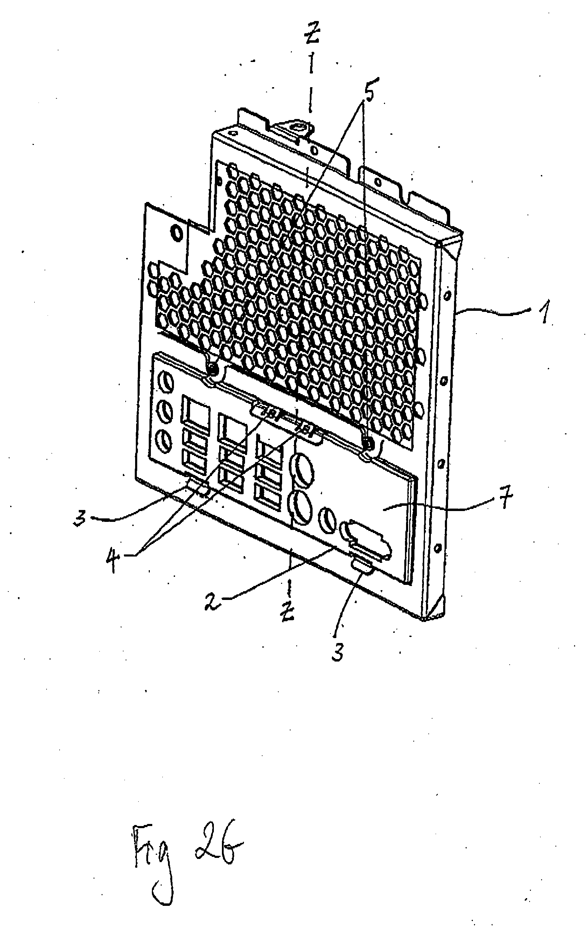

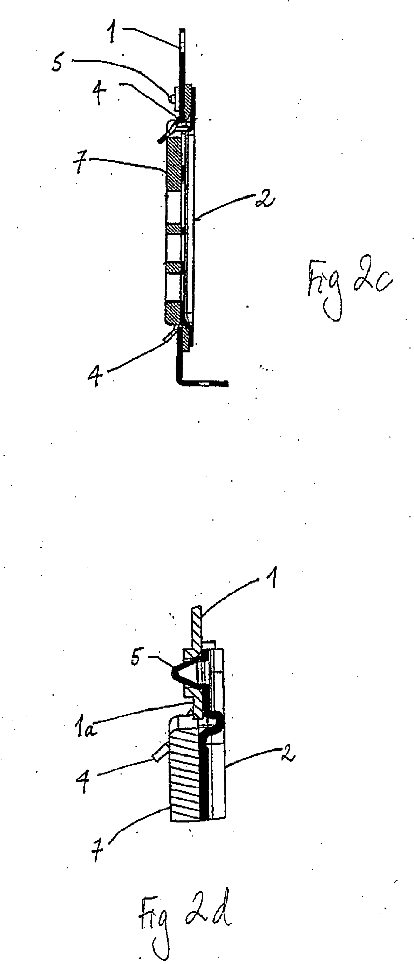

Das in der Chassis-Rückwand 1 eingeschnappte I/O-Blech 2 ist in die Figuren 2a bis 2d dargestellt. Figur 2a zeigt das montierte I/O-Blech 2 und die Chassis-Rückwand 1 von der Computeraußenseite gesehen, und die Figur 2b zeigt sie von der Computerinnenseite aus betrachtet. Die Führungsnasen 5 des I/O-Blechs 2 sind jetzt durch die Führungsöffnungen 6 der Chassis-Rückwand 1 geführt (siehe Figur 2b und Figur 2d). Die Figur 2c zeigt einen Querschnitt durch die in Figuren 2a und 2b mit Z-Z gekennzeichnete Achse. Figur 2d zeigt einen Abschnitt eines Querschnitts durch die in Figur 2a mit Z'-Z' gekennzeichnete Achse, bei dem die Führungsnasen 5 deutlicher dargestellt sind.

Bezugszeichenliste
- 1: Chassis-Rückwand
- 1a: I/O-Ausschnittsrand der Chassis-Rückwand
- 2: I/O-Blech
- 3: Lasche
- 4: Feder-Element
- 5: Führungsnase
- 6: Führungsöffnung
- 7: Gasket (Schirmmaterial)

## Patentansprüche

1. I/O-Blech (2) in einem Computergehäuse (1),
**dadurch gekennzeichnet, dass**
das I/O-Blech (2) durch eine lösbare Schnapp- oder Klemmverbindung mit dem Computergehäuse (1) verbunden ist und das I/O-Blechs (2) zumindest eine Lasche (3) zum Einhängen am Computergehäuse (1) aufweist, wobei das I/O-Blech (2) für die Montage um die wenigstens eine Lasche (3) geschwenkt.wird.

2. I/O-Blech (2) nach Anspruch 1,
**dadurch gekennzeichnet, dass**
die Schnapp- oder Klemmverbindung ein Feder-Element (4) aufweist.

3. I/O-Blech (2) nach einem der Ansprüche 1 oder 2,
**dadurch gekennzeichnet, dass**
das I/O-Blech (2) zumindest eine Führungsnase (5) und das Computergehäuse (1) zumindest eine entsprechende Führungsöffnung (6) zur Positionierung des I/O-Blechs (2) im Computergehäuse (1) aufweist.
